# EUROPEAN PATENT SPECIFICATION

(11) **EP 2 779 736 B1**
(45) Date of publication and mention of the grant of the patent: **25.03.2020**
(21) Application number: 12859004.9
(22) Date of filing: 16.05.2012
(51) Int. Cl.: H04W 28/08, H04W 36/22

(54) **LOAD BALANCING METHOD AND CONTROL APPARATUS**
LASTAUSGLEICHSVERFAHREN UND STEUERUNGSVORRICHTUNG
PROCÉDÉ D'ÉQUILIBRAGE DE CHARGES ET APPAREIL DE COMMANDE

(30) Priority: 19.12.2011 CN 201110427125
(43) Date of publication of application: 17.09.2014
(73) Proprietor: ZTE Corporation, Shenzhen, Guangdong 518057 (CN)
(72) Inventor: CAO, Yijin, Shenzhen Guangdong 518057 (CN)
(74) Representative: Novagraaf Technologies
(86) International application number: PCT/CN2012/075604
(87) International publication number: WO 2013/091341

(56) References cited:
- EP-A1- 2 389 040
- CN-A- 101 801 030
- CN-A- 101 801 031
- CN-A- 101 969 651
- CN-A- 102 131 237
- GB-A- 2 359 701
- US-B1- 7 480 264

## Description

### Technical Field

The present invention relates to the field of communication, in particular to a load balancing method and a control apparatus.

### Background

In a current Long Time Evolution (LTE) communication system, load balancing is implemented by the calculations of a plurality of base stations, that is, in the current coverage area, every two of the base stations report the resource usage condition to each other via an X2 interface, and each base station needs to periodically calculate and judge the load balancing coefficients of the peripheral same-coverage adjacent cells and all the cells in the present base station. When the load balancing coefficient of a certain cell reaches a certain threshold and is the highest in the load balancing coefficients of all the calculated cells, the base station to which the cell belongs will perform corresponding load balancing operations.

However, the following problems will appear if the load balancing strategy is performed according to the above-mentioned manners: each base station periodically calculates the load balancing coefficients of the peripheral same-coverage adjacent cells and all the cells in the present base station, while only one base station performs load balancing after each period finishes, that is, other base stations do not perform load balancing after calculation, which is a potential resource waste and greatly increases the expenditure of each base station, especially when the number of the cells is considerable, the calculating amount will greatly increase. US 7 480 264 B1, EP 2 389 040 A1 and GB 2 359 701 A describe related technologies.

In view of the resource waste problem in the load balancing method in the related art, no effective solution has been proposed so far.

### Summary

An embodiment of the present invention provides a load balancing method and a control apparatus so as to at least solve the resource waste problem in the load balancing method.

The invention is disclosed in the appended claims.

In the embodiments of the present invention, a control apparatus receives the load balancing coefficients of all cells which belong to a plurality of base stations, ranks the cells according to the values of the load balancing coefficients, and sends the ranking result to a base station corresponding to the cell with the highest load balancing coefficient. In this way, there is no need for all the base stations to calculate the load balancing coefficients of the peripheral same-coverage adjacent cells or perform ranking operation on these load balancing coefficients. Different from the load balancing solution that each base station needs to perform load balancing processing in the related art, only one control apparatus is used in the embodiments of the present invention to implement the load balancing processing so as to reduce the expenditure of each base station, especially when the number of the cells is relatively large, the calculating amount will greatly reduce, thereby solving the resource waste problem in the load balancing method in the related art and improving the utilization efficiency of the resources.

### Brief Description of the Drawings

Drawings, provided for further understanding of the present invention and forming a part of the specification, are used to explain the present invention together with embodiments of the present invention rather than to limit the present invention. In the drawings:
Fig. 1 is a flowchart of a load balancing method according to an example of the present invention;
Fig. 2 is a control apparatus according to an example of the present invention;
Fig. 3 is a schematic diagram showing a system adopting a load balancing method based on module centralized control according to example I of the present invention;
Fig. 4 is a schematic diagram showing a system adopting a load balancing method in which a judgment module is applied to a base station according to example II of the present invention;
Fig. 5 is a schematic diagram showing a system adopting a load balancing method in which a judgment module is applied to a network element management layer according to example III of the present invention;
Fig. 6 is a schematic diagram showing a system adopting a load balancing method in which a judgment module is applied to a core network according to example IV of the present invention; and
Fig. 7 is a schematic diagram showing a system adopting a load balancing method in which a judgment module is applied to a network element management layer and which is compatible with the current load balancing method according to example V of the present invention.

### Detailed Description of the Embodiments

The present invention is described below with reference to the accompanying drawings and embodiments in detail. Note that, the embodiments of the present invention and the features of the embodiments can be combined with each other if there is no conflict.

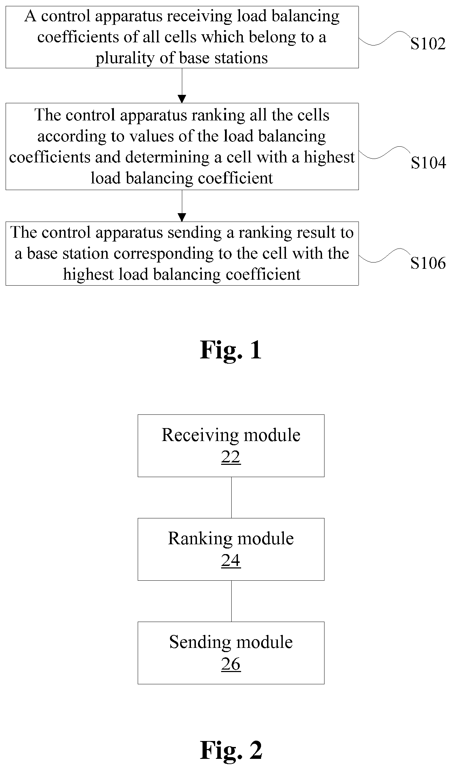

The present embodiment can be used in a wireless communication system, the load balancing method in an LTE mobile communication system is described below as an example. In order to solve the resource waste problem in the load balancing method in the related art, the embodiments provide a load balancing method and a control apparatus. Fig. 1 is a flowchart of a load balancing method according to an example of the present invention. As shown in fig. 1, the method includes the following steps.

Step S102, a control apparatus receives load balancing coefficients of all cells which belong to a plurality of base stations.

Step S104, the control apparatus ranks all the cells according to values of the load balancing coefficients and determines a cell with a highest load balancing coefficient.

Step S106, the control apparatus sends a ranking result to a base station corresponding to the cell with the highest load balancing coefficient.

In the example of the present invention, the control apparatus receives the load balancing coefficients of all cells which belong to a plurality of base stations, ranks the cells according to the values of the load balancing coefficients, and sends the ranking result to the base station corresponding to the cell with the highest load balancing coefficient. In this way, there is no need for all the base stations to calculate the load balancing coefficients of the peripheral same-coverage adjacent cells or perform ranking operation on these load balancing coefficients. Different from the load balancing solution that each base station needs to perform load balancing processing in the related art, only one control apparatus is used in the examples of the present invention to implement the load balancing processing so as to reduce the expenditure of each base station, especially when the number of the cells is relatively large, the calculating amount will greatly reduce, thereby solving the resource waste problem in the load balancing method in the related art and improving the utilization efficiency of the resources.

After the above-mentioned control apparatus sends the ranking result to the base station corresponding to the cell with the highest load balancing coefficient, the base station (for example, it may be an Evolved NodeB (eNB) in an LTE system), can perform corresponding switch operations on at least one User Equipment (UE), the specific method includes the steps as following.

When the base station corresponding to the cell with the highest load balancing coefficient receives the ranking result and further determines, according to load balancing parameters configured by the base station in advance, that the cell with the highest load balancing coefficient needs to perform load balancing, at least one user equipment in the cell with the highest load balancing coefficient is selected and instructed to make switching attempt in all the cells sequentially according to the ranking result and a pre-determined rule.

The pre-determined rule mentioned here may be a known protocol, also may be a rule set by the base station in advance according to practical situations (for example, setting a rule for limiting the number of times for UE to make the switching attempt, or setting a rule for limiting the time for UE to make the switching attempt, etc.), and the UE attempts to switch according to the pre-determined rule. In this example, limiting the number of times for attempting to switch is taken as an example, in this example, the number of times for attempting to switch is set to be 5, the UE firstly switches to a cell with the lowest load according to the cell ID list, if the switching fails, the UE attempts to switch to a cell with a secondary lowest load, if the switching fails again, the UE can make further switching attempts; the attempts can be performed for the number of times for switching attempt set previously, i.e., 5 times at most. However, if the first attempt for switching succeeds in the implementation process, the latter attempts for switching will not be performed; for the same reasoning, if any one of the second to the fourth attempts succeeds, the latter attempt(s) for switching are/is not needed. It should be noted that the above-mentioned switching times, switching sequence and other related parameters are set according to practical situations and are not limited to the listed numerical values.

In order to facilitate the base station corresponding to the cell with the highest load balancing coefficient to perform load balancing operation, when the control apparatus sends the ranking result to the base station corresponding to the cell with the highest load balancing coefficient, the control apparatus generates a cell identifier list based on cell identifiers corresponding to the cells according to the ranking result, and sends the cell identifier list to the base station corresponding to the cell with the highest load balancing coefficient. In this manner, when the base station corresponding to the cell with the highest load balancing coefficient performs load balancing operation, the UE can be directly instructed to switch according to designated cell identifiers, which is simple and practical. There are various manners for sending the cell identifier list to the base station corresponding to the cell with the highest load balancing coefficient, for example, the above-mentioned control apparatus may send the cell identifier list to the base station corresponding to the cell with the highest load balancing coefficient via an internal message or in other forms, of course, if other messages can send the cell identifier list, other messages also can be used.

In the present examples, each base station can calculate the load balancing coefficients of its own and reports the load balancing coefficients to the control apparatus (the control apparatus may be an independent device, or may be a module implemented through software, such as a judgment module), the base station can judge through the execution result of the control apparatus that whether there is a need to execute load balancing and how to execute load balancing, thereby reducing the waste of resources caused by a plurality of base stations calculating the load balancing coefficients of a plurality of cells repeatedly.

In order to ensure the compatibility with the existing solution, a switch may be added for controlling the execution of the load balancing operation, and this switch may be called as a centrally controlled load balancing switch in the present example. When the centrally controlled load balancing switch is on, the above-mentioned load balancing method is carried out, when the centrally controlled load balancing switch is off, the processing is carried out according to the load balancing method in the related art. For example, in a coverage area, a centrally controlled load balancing switch deployed in each base station is set in an enabled state, wherein the centrally controlled load balancing switch is used for controlling a base station where the centrally controlled load balancing switch is located to send the load balancing coefficients of all cells which belong to this base station. When the above-mentioned switch takes effect, each base station only needs to calculate the load balancing coefficients of the cells in the present base station, the control apparatus ranks the cells according to the load balancing coefficients of all the cells, selects a cell with the highest load balancing coefficient and sends the ranking result to the base station to which the cell with the highest load balancing coefficient belongs, and the base station judges and performs load balancing according to load balancing relevant parameters.

Before the control apparatus receives the load balancing coefficients of all cells which belong to a plurality of base stations, the control apparatus also may periodically receive load balancing coefficients of the current cycle sent by the plurality of base stations, wherein the load balancing coefficients of the current cycle may be obtained according to the following step: each base station in the plurality of base stations periodically calculates current-cycle load balancing coefficients of all cells which belong to this base station, and the obtained load balancing coefficients of the current cycle are sent to the control apparatus. This manner of periodically obtaining the load balancing coefficients of the current cycle is convenient and feasible, and of course, the load balancing coefficients of the current cycle also may be obtained in the manner of arranging a timer. As for the base station, data is periodically updated, and the UE can be switched to a cell with better network condition in the follow-up switching so as to improve the quality of the network used by UE.

It should be noted that the above-mentioned control apparatus may be deployed at a network side or a base station side, it may be an independent hardware device, and also may be a software module operated in a network element.

The above-mentioned network side includes any one of the following: a network element management layer and a core network. When the control apparatus is deployed at the network element management layer, the control apparatus may receive the load balancing coefficients via a customized internal interface, such as a network port. When the control apparatus is deployed at the core network, the control apparatus may receive the load balancing coefficients via an S 1 interface.

The above-mentioned base station side includes any one base station of the plurality of base stations. When the control apparatus is deployed to any one base station of the plurality of base stations, the control apparatus may receive the load balancing coefficients via an X2 interface.

Corresponding to the above-mentioned method, an example of the present invention also provides a control apparatus. Fig. 2 is a control apparatus according to an example of the present invention. As shown in Fig. 2, the apparatus includes a receiving module 22, a ranking module 24 and a sending module 26, wherein the receiving module 22 is configured to receive load balancing coefficients of all cells which belong to a plurality of base stations; the ranking module 24 is coupled with the receiving module 22 and is configured to rank all the cells according to values of the load balancing coefficients received by the receiving module 22 and determine a cell with a highest load balancing coefficient; and the sending module 26 is coupled with the ranking module 24 and is configured to send a ranking result of the ranking module 24 to a base station corresponding to the cell with the highest load balancing coefficient.

In the present example, by adopting the above-mentioned control apparatus, the load balancing coefficients of all cells which belong to a plurality of base stations are received by the receiving module 22 and the cells are ranked according to the numerical values of the load balancing coefficients by the ranking module 24, and the ranking result is sent to a base station corresponding to the cell with the highest load balancing coefficient by the sending module 26, therefore, there is no need for all the base stations to calculate the load balancing coefficients of the peripheral same-coverage adjacent cells or perform ranking operation on these load balancing coefficients. Different from the load balancing solution that each base station needs to perform load balancing processing in the related art, only one control apparatus is used in the example of the present invention to implement the load balancing processing so as to reduce the expenditure of each base station, especially when the number of the cells is relatively large, the calculating amount will greatly reduce, thereby solving the resource waste problem in the load balancing method in the related art and improving the utilization efficiency of the resources.

The following description is made in combination with preferred examples, and the preferred examples are combination of the above-mentioned examples and some preferred implementation.

### Example I

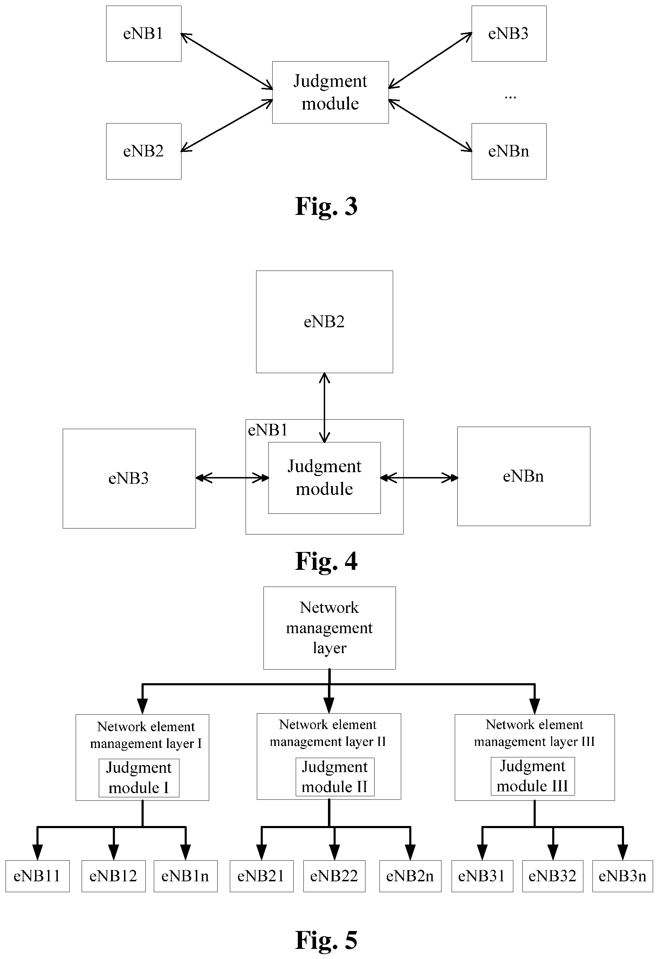

In the present preferred example, description is made by taking the utilization of the centrally controlled load balancing switch to control the above-mentioned load balancing method as an example, and a method based on module centralized control is provided for LTE load balancing. Fig. 3 is a schematic diagram showing a system adopting a load balancing method based on module centralized control according to example I of the present invention. As shown in Fig. 3, the system includes a judgment module (that is, the above-mentioned control apparatus) and a plurality of base stations which perform load balancing under the control of the judgment module.

Based on the system of Fig. 3, the load balancing method based on module centralized control includes the following steps.
Step I: a switch of load management is configured, to enable a centrally controlled load management function.
Step II: each base station periodically calculates the load balancing coefficients of all the cells in the present base station according to relevant parameters configured by the load management.
Step III: the base station sends the load balancing coefficients to the judgment module after the base station calculates the load balancing coefficients.
Step IV: after the judgment module has collected information reported by the multiple base stations, the judgment module ranks the load balancing coefficients of all the cells from high to low and outputs a cell identifier (a cell has a unique cell identifier) list.
Step V: the judgment module sends the list generated in Step IV to the base station to which the cell with the highest load balancing coefficient belongs.
Step VI: the base station judges whether there is a need to perform load balancing according to load balancing related parameters after having received the list generated by the judgment module, if there is such need, at least one UE is instructed to make switching attempt according to the cell ID list one by one.
Step VII: the switch of load management is configured, to disable the centrally controlled load management function, and all the base stations can report resources via an X2 interface and judge and perform load balancing individually and independently.

According to the above-mentioned method, it is avoided that each base station calculates the load balancing coefficients of all the adjacent cells, and it is also avoided that each base station judges whether there is a need to execute load balancing and determines how to execute load balancing.

### Example II

In the present preferred example, description is made by taking the application of the above-mentioned judgment module to a certain base station as an example. Fig. 4 is a schematic diagram showing a system adopting a load balancing method in which a judgment module is applied to a base station according to example II of the present invention. As shown in Fig. 4, the system includes a judgment module (that is, the above-mentioned control apparatus) and a plurality of base stations (including a base station eNB1 where the judgment module is located) which perform load balancing under the control of the judgment module.

Based on the system of Fig. 4, the load balancing method in which a judgment module is applied to a base station includes the following steps.
Step I: eNB1, eNB2 to eNBn are in the same coverage area, and the judgment module is deployed in a system of eNB1.
Step II: "centrally controlled load balancing" switches of all the base stations are set to be enabled, and the reporting period of load balancing resources is set to be 5000 ms.
Step III: the eNB1 configured with the judgment module sends a RESOURCE STATUS REQUEST message to other base stations, wherein the cell "message Type" carried in the message is 254 (which can be user-defined according to protocol). After receiving the RESOURCE STATUS REQUEST message, other base stations reply a RESOURCE STATUS RESPONSE message to inform eNB 1 that load information can be sent normally. The eNB 1 summarizes and calculates the sum n of the number of the cells in the correctly received RESOURCE STATUS RESPONSE message and the number of the cells in the eNB 1 itself and notifies the judgment module of the value n.
Step IV: the eNB 1 calculates the load balancing coefficients of its own every 5000ms and notifies the judgment module of the load balancing coefficients. Other eNBs send internal messages via an X2 interface every 5000 ms, wherein the "message Type" is 253 (253 can be user-defined according to the protocol, and it represents that the carried cell is the load balancing coefficients of all the cells in the base station), and notify the judgment module on eNB 1 of the load balancing coefficients and the cell identifiers (ID) of all the cells in the present base station.
Step V: after having collected the load balancing coefficients of n cells, the judgment module ranks these load balancing coefficients from high to low and outputs a cell ID list. It is supposed that the load balancing coefficient of cell 2 of the eNB3 is the highest, the judgment module sends an internal message to the eNB3, wherein the "message Type" is 252 (252 can be user-defined according to the protocol), and the carried cell is an output cell ID list.
Step VI: after receiving the internal message of which the "message Type" is 252, the eNB3 judges whether there is a need to perform load balancing according to load balancing related parameters internally configured, if there is such need, at least one UE is instructed to make switching attempt according to the cell ID list in the internal message one by one to perform load balancing.
Step VII: when the next 5000ms period arrives, step IV to step VI are repeated.

According to the above-mentioned method, it is avoided that each base station calculates the load balancing coefficients of all the adjacent cells, and it is also avoided that each base stations judges whether there is a need to execute load balancing and determines how to execute load balancing.

### Example III

In the present preferred example, description is made by taking the application of the above-mentioned judgment module to a network element management layer as an example. Fig. 5 is a schematic diagram showing a system adopting a load balancing method in which a judgment module is applied to a network element management layer according to example III of the present invention. As shown in Fig. 5, the system includes a plurality of judgment modules (that is, the above-mentioned control apparatus), a plurality of network element management layers where the above-mentioned judgment modules are located, and a plurality of base stations which perform load balancing under the control of the above-mentioned judgment modules.

Based on the system of Fig. 5, the method in which a judgment module is applied to a network element management layer includes the following steps.
Step I: basically, network element base stations managed by each network element management layer are all in the same coverage area, and the judgment module is applied on each network element management layer.
Step II: "centrally controlled load balancing" switches of all the base stations are set to be enabled, and the reporting period of load balancing resources is set to be 5000 ms.
Step III: once finding a "centrally controlled load balancing" switch of a network element dominated by the network element management layer is enabled, the network element management layer notifies a judgment module I to send an internal message to eNB11, eNB12 to eNB1n via an internet port to instruct eNB11, eNB12 to eNB1n to report the load balancing coefficients.
Step IV: after receiving a message sent by the judgment module I, eNB11, eNB12 to eNB1n give a feedback message to the judgment module I to notify that eNB11, eNB12 to eNB1n can send the load balancing coefficients, and the judgment module counts the number n of the feedback messages successfully received.
Step V: eNB11, eNB12 to eNB1n take 5000 ms as a period to calculate the load balancing coefficients of all the cells, and notify the judgment module I of the cell IDs and the load balancing coefficients by sending internal messages via the network port.
Step VI: after having collected the messages of n cells, the judgment module ranks the load balancing coefficients from high to low, and outputs the cell ID list. It is supposed that the load balancing coefficient of cell 1 of eNB12 is the highest, the judgment module sends the output cell ID list to eNB12 through an internal message.
Step VII: after receiving the cell ID list from the judgment module, eNB12 judges whether there is a need to perform load balancing according to load balancing related parameters internally configured, if there is such need, at least one UE is instructed to make switching attempt according to the cell ID list in the internal message one by one to perform load balancing.
Step VIII: when the next 5000 ms period arrives, step V to step VII are repeated.
Step IX: once finding out the "centrally controlled load balancing" switches of all the network elements are enabled, a network element management layer II and a network element management layer III carry out the same operation as network element management layer I.

According to the above-mentioned method, it is avoided that each base station calculates the load balancing coefficients of all the adjacent cells, and it is also avoided that each base station judges whether there is a need to execute load balancing and determines how to execute load balancing. In related art, when there is something wrong with the X2 interface among base stations, the resource usage condition is unable to be reported from one base station to another, and the judgment on the load balancing coefficients cannot be performed either. While in the present preferred example, the judgment module is deployed in the management layer, the communication with the base stations controlled by the judgment module can be performed via an interface internally deployed (such as a network interface), which solves the problem that the load balancing cannot be executed when the X2 interface is abnormal.

### Example IV

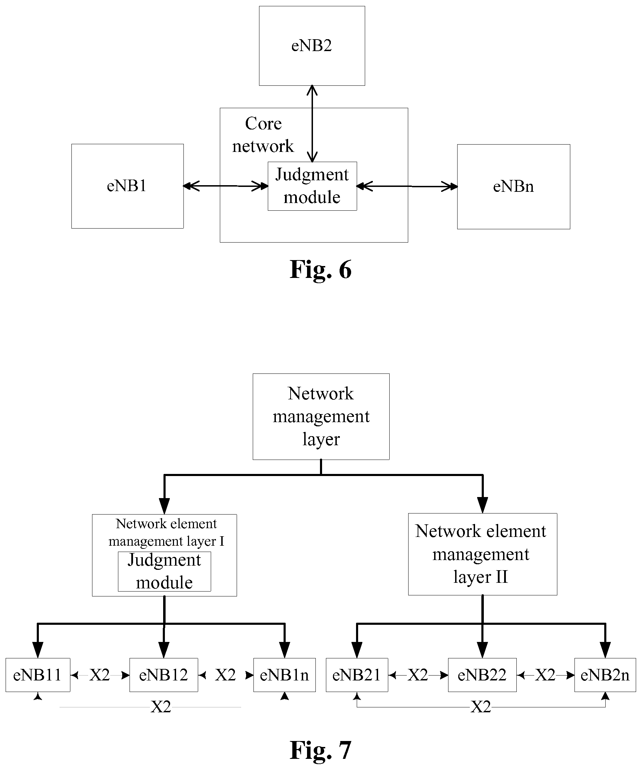

In the present preferred example, description is made by taking the application of the above-mentioned judgment module to a core network as an example. Fig. 6 is a schematic diagram showing a system adopting a load balancing method in which a judgment module is applied to a core network according to example IV of the present invention. As shown in Fig. 6, the system includes a judgment module (that is, the above-mentioned control apparatus), a core network where the judgment module is located and a plurality of base stations which perform load balancing under the control of the judgment module.

Based on the system of Fig. 6, the method in which a judgment module is applied to a core network includes the following steps.
Step I: eNB1, eNB2 to eNBn are in the same coverage area, the judgment module is applied to a core network, the coupling number of the S1 interfaces between the core network and the base stations is n, wherein n is the maximum number of the base stations from which the judgment module can receive information, and if the number of the base stations from which the judgment module can receive information exceeds n, it is considered that the load balancing coefficients received at this time are invalid.
Step II: "centrally controlled load balancing" switches of all the base stations are set to be enabled, and the reporting period of load balancing resources is set to be 5000 ms.
Step III: eNB1, eNB2 to eNBn take 5000 ms as a period to calculate the load balancing coefficients of all the cells and send the load balancing coefficients and the cell ID list to the judgment module of the core network through internal messages via the S1 interface.
Step IV: after having collected the messages of n base stations, the judgment module ranks the collected load balancing coefficients from high to low, and outputs a cell ID list according to the ranking result. It is supposed that the load balancing coefficient of cell 1 of eNB2 is the highest, then the judgment module sends the output cell ID list to eNB2 through an internal message.
Step V: after receiving the cell ID list from the judgment module, eNB2 judges whether there is a need to perform load balancing according to load balancing related parameters internally configured, if there is such need, at least one UE is instructed to make switching attempt according to the cell ID list in the internal message one by one to perform load balancing.

According to the above-mentioned method, it is avoided that each base station calculates the load balancing coefficients of all the adjacent cells, and it is also avoided that each base stations judges whether there is a need to execute load balancing and determines how to execute load balancing. In related art, when there is something wrong with the X2 interface among base stations, the resource usage condition is unable to be reported from one base station to another, and the judgment on the load balancing coefficients cannot be performed either. While in the present preferred example, the judgment module is deployed in the core network, the communication with the base stations controlled by the judgment module can be performed via an interface internally deployed (such as S1 interface), which solves the problem that the load balancing cannot be executed when the X2 interface is abnormal.

### Example V

In the present preferred example, description is made by taking a load balancing method in which a judgment module is applied to a network element management layer and which is compatible with the current load balancing method as an example. Fig. 7 is a schematic diagram showing a system adopting a load balancing method in which a judgment module is applied to a network element management layer and which is compatible with the current load balancing method according to example V of the present invention. As shown in Fig. 7, the system includes one judgment module (that is, the above-mentioned control apparatus), a network element management layer I where the judgment module is located, a plurality of base stations which perform load balancing under the control of the above-mentioned judgment module, a network element management layer II using the current load balancing method for performing load balancing, and a plurality of base stations managed by the network element management layer II.

Based on the system of Fig. 7, the load balancing method in which a judgment module is applied to a network element management layer and which is compatible with the current load balancing method includes the following steps.
Step I: basically, network element base stations managed by each network element management layer are all in the same coverage area, and the judgment module is applied on the network element management layer I.
Step II: "centrally controlled load balancing" switches of all the base stations under the network element management layer I are set to be enabled, and the reporting period of load balancing resources is set to be 5000 ms. "Centrally controlled load balancing" switches of all the base stations under the network element management layer II are set to be disenabled, but the load balancing functions of all the base stations under the network element management layer II are set to be enabled.
Step III: once finding a "centrally controlled load balancing" switch of a network element dominated by the network element management layer is enabled, the network element management layer notifies a judgment module I to send an internal message to eNB11, eNB12 to eNB1n via an internet port to instruct eNB11, eNB12 to eNB1n to report the load balancing coefficients.
Step IV: after receiving a message sent by the judgment module, eNB11, eNB12 to eNB1n give a feedback message to the judgment module to notify that eNB11, eNB12 to eNB1n can send the load balancing coefficients, and the judgment module counts the number n of the feedback messages successfully received.
Step V: eNB11, eNB12 to eNB1n take 5000 ms as a period to calculate the load balancing coefficients of all the cells, and notify the judgment module of the cell IDs and the load balancing coefficients by sending internal messages via the network port.
Step VI: after having collected the messages of n cells, the judgment module ranks the load balancing coefficients from high to low, and outputs the cell ID list. It is supposed that the load balancing coefficient of cell 1 of eNB12 is the highest, and the judgment module sends the output cell ID list to eNB12 through an internal message.
Step VII: after receiving the cell ID list from the judgment module, eNB12 judges whether there is a need to perform load balancing according to load balancing related parameters internally configured, if there is such need, at least one UE is instructed to make switching attempt according to the cell ID list in the internal message one by one to perform load balancing.
Step VIII: after eNB21, eNB22 to eNB2n send a RESOURCE STATUS REQUEST message to each other via the X2 interface, eNB21, eNB22 to eNB2n reply a RESOURCE STATUS RESPONSE message.
Step IX: eNB21, eNB22 to eNB2n send internal messages by taking the time T carried in the RESOURCE STATUS REQUEST message as a period.
Step X: after each eNB in eNB21, eNB22 to eNB2n receives LOAD INFORMATION, the eNB calculates the load balancing coefficients of the cells of other base stations according to the cell carried in the messages, then judge whether the load balancing coefficients of the cells of the present eNB reach a load balancing threshold and whether a cell of the present eNB is the cell with the highest load balancing coefficient, if yes, at least one UE is instructed to perform the switching operation to achieve the purpose of load balancing, if no, wait for the arrival of the next period T to judged whether to perform load balancing.
Step XI: if the judgment module managed by the network element management layer I is abnormal, the "centrally controlled load balancing" switch is set to be disabled. eNB11, eNB12 to eNB1n continue to perform load balancing according to the load balancing executing manner of the base stations controlled by the network element management layer II.

According to the above-mentioned method, it is avoided that each base station calculates the load balancing coefficients of all the adjacent cells, and it is also avoided that each base stations judges whether there is a need to execute load balancing and determines how to execute load balancing. In related art, when there is something wrong with the X2 interface among base stations, the resource usage condition is unable to be reported from one base station to another, and the judgment on the load balancing coefficients cannot be performed either. While in the present preferred example, the judgment module is deployed in the management layer, the communication with the base stations controlled by the judgment module can be performed via an interface internally deployed (such as a network interface), which solves the problem that the load balancing cannot be executed when the X2 interface is abnormal; besides, the load balancing manner in the present preferred example is compatible with the existing solution.

It can be concluded from the above description that, the examples of the present invention uses the method that a control apparatus receives the load balancing coefficients of all cells which belong to a plurality of base stations, ranks same according to the numerical values, and sends the ranking result to a base station corresponding to the cell with the highest load balancing coefficient, so that there is no need for all the base stations to calculate the load balancing coefficients of the peripheral same-coverage adjacent cells or perform ranking operation on these load balancing coefficients. Different from the load balancing solution that each base station needs to perform load balancing processing in the related art, only one control apparatus is used in the examples of the present invention to implement the load balancing processing so as to reduce the expenditure of each base station, especially when the number of the cells is relatively large, the calculating amount will greatly reduce, thereby solving the resource waste problem in the load balancing method in the related art and improving the utilization efficiency of the resources.

Obviously, those skilled in the art shall understand that the above-mentioned modules and steps of the present invention can be realized by using general purpose calculating device, can be integrated in one calculating device or distributed on a network which consists of a plurality of calculating devices. Alternatively, the modules and the steps of the present invention can be realized by using the executable program code of the calculating device. Consequently, they can be stored in the storing device and executed by the calculating device, or they are made into integrated circuit module respectively, or a plurality of modules or steps thereof are made into one integrated circuit module. In this way, the present invention is not restricted to any particular hardware and software combination.

The descriptions above are only the preferable embodiment of the present invention, which are not used to restrict the present invention. For those skilled in the art, the present invention may have various changes and variations. Any amendments, equivalent substitutions, improvements, etc. within the principle of the present invention as defined in the claims are all included in the scope of the protection of the present invention.

## Claims

1. A load balancing method, comprising:
a control apparatus receiving (S102) load balancing coefficients of all cells which belong to a plurality of base stations;
the control apparatus ranking (S104) all the cells according to values of the load balancing coefficients and determining a cell with a highest load balancing coefficient; and
the control apparatus sending (S106) a ranking result to a base station corresponding to the cell with the highest load balancing coefficient,
**characterized in that** before the control apparatus receiving (S102) the load balancing coefficients of all cells which belong to a plurality of base stations, the method further comprises:
the control apparatus periodically receiving load balancing coefficients of a current cycle sent by the plurality of base stations, wherein the load balancing coefficients of the current cycle are obtained according to the following steps:
each base station in the plurality of base stations periodically calculating current-cycle load balancing coefficients of all cells which belong to the base station, and sending the load balancing coefficients of the current cycle to the control apparatus.

2. The method according to claim 1, wherein the control apparatus sending (S106) the ranking result to the base station corresponding to the cell with the highest load balancing coefficient comprises:
the control apparatus generating a cell identifier list based on cell identifiers corresponding to respective cells according to the ranking result; and
the control apparatus sending the cell identifier list to the base station corresponding to the cell with the highest load balancing coefficient.

3. The method according to claim 1, wherein the control apparatus is deployed at a network side or a base station side.

4. The method according to claim 3, wherein the network side comprises any one of: a network element management layer and a core network.

5. The method according to claim 4, wherein when the control apparatus is deployed at the core network, the control apparatus receives the load balancing coefficients via an S 1 interface.

6. The method according to claim 3, wherein the base station side comprises any one base station of the plurality of base stations.

7. The method according to claim 6, wherein when the control apparatus is deployed at any one base station of the plurality of base stations, the control apparatus receives the load balancing coefficients via an X2 interface.

8. The method according to any one of claims 1-7, wherein that after the control apparatus sending (S106) the ranking result to the base station corresponding to the cell with the highest load balancing coefficient, the method further comprises:
when the base station corresponding to the cell with the highest load balancing coefficient determines, according to load balancing parameters configured by the base station in advance, that the cell with the highest load balancing coefficient needs to perform load balancing, selecting at least one user equipment, UE, in the cell with the highest load balancing coefficient and instructing the at least one UE to make switching attempt in respective cells sequentially according to the ranking result and a pre-determined rule.

9. The method according to any one of claims 1-7, wherein that before the control apparatus receiving (S102) the load balancing coefficients of all cells which belong to a plurality of base stations, the method further comprises:
setting a centrally controlled load balancing switch deployed in each base station in an enabled state, wherein the centrally controlled load balancing switch is used for controlling a base station where the centrally controlled load balancing switch is located to send the load balancing coefficients of all cells which belong to the base station.

10. A system, comprising:
a control apparatus and a plurality of base stations;
wherein the control apparatus comprises:
a receiving module (22), configured to receive load balancing coefficients of all cells which belong to a plurality of base stations;
a ranking module (24), configured to rank all the cells according to values of the load balancing coefficients received by the receiving module and to determine a cell with a highest load balancing coefficient; and
a sending module (26), configured to send a ranking result of the ranking module to a base station corresponding to the cell with the highest load balancing coefficient,
**characterized in that**
the control apparatus is configured to, before the receiving module receives the load balancing coefficients of all cells which belong to a plurality of base stations, periodically receive load balancing coefficients of a current cycle sent by the plurality of base stations,
wherein each base station in the plurality of base stations is adapted for periodically calculating current-cycle load balancing coefficients of all cells which belong to the base station, and adapted for sending the load balancing coefficients of the current cycle to the control apparatus.

## Patentansprüche

1. Lastausgleichsverfahren, umfassend:
Empfangen (S102), durch eine Steuerungsvorrichtung, von Lastausgleichskoeffizienten aller Zellen, die zu einer Vielzahl von Basisstationen gehören;
Einstufen (S104), durch die Steuerungsvorrichtung, aller Zellen gemäß Werten der Lastausgleichskoeffizienten und Bestimmen einer Zelle mit einem höchsten Lastausgleichskoeffizienten; und
Senden (S106), durch die Steuerungsvorrichtung, eines Einstufungsergebnisses an eine Basisstation, die der Zelle mit dem höchsten Lastausgleichskoeffizienten entspricht,
**dadurch gekennzeichnet, dass**, vor dem Empfangen (S102), durch die Steuerungsvorrichtung, der Lastausgleichskoeffizienten aller Zellen, die zu einer Vielzahl von Basisstationen gehören, das Verfahren weiter Folgendes umfasst:
periodisches Empfangen, durch die Steuerungsvorrichtung, von Lastausgleichskoeffizienten eines laufenden Zyklus, die von der Vielzahl von Basisstationen gesendet wurden, wobei die Lastausgleichskoeffizienten des laufenden Zyklus gemäß den folgenden Schritten empfangen werden:
periodisches Berechnen, durch jede Basisstation in der Vielzahl von Basisstationen, der Lastausgleichskoeffizienten aller Zellen des laufenden Zyklus, die zur Basisstation gehören, und Senden der Lastausgleichskoeffizienten des laufenden Zyklus an die Steuerungsvorrichtung.

2. Verfahren nach Anspruch 1, wobei das Senden (S106), durch die Steuerungsvorrichtung, des Einstufungsergebnisses an die Basisstation, die der Zelle mit dem höchsten Lastausgleichskoeffizienten entspricht, Folgendes umfasst:
Erzeugen, durch die Steuerungsvorrichtung, einer Zellkennzeichnungsliste, basierend auf Zellkennzeichnungen, die jeweiligen Zellen gemäß dem Einstufungsergebnis entsprechen; und
Senden, durch die Steuerungsvorrichtung, der Zellkennzeichnungsliste an die Basisstation, die der Zelle mit dem höchsten Lastausgleichskoeffizienten entspricht.

3. Verfahren nach Anspruch 1, wobei die Steuerungsvorrichtung an der Seite eines Netzwerks oder der Seite einer Basisstation eingesetzt wird.

4. Verfahren nach Anspruch 3, wobei die Seite des Netzwerks eines der Folgenden umfasst: eine Netzwerkelement-Managementschicht und ein Kernnetzwerk.

5. Verfahren nach Anspruch 4, wobei, wenn die Steuerungsvorrichtung am Kernnetzwerk eingesetzt wird, die Steuerungsvorrichtung die Lastausgleichskoeffizienten über eine S1-Schnittstelle empfängt.

6. Verfahren nach Anspruch 3, wobei die Seite der Basisstation jede Basisstation der Vielzahl von Basisstationen umfasst.

7. Verfahren nach Anspruch 6, wobei, wenn die Steuerungsvorrichtung an einer Basisstation der Vielzahl von Basisstationen eingesetzt wird, die Steuerungsvorrichtung die Lastausgleichskoeffizienten über eine X2-Schnittstelle empfängt.

8. Verfahren nach einem der Ansprüche 1 bis 7, wobei nach dem Senden (S106), durch die Steuerungsvorrichtung, des Einstufungsergebnisses an die Basisstation, die der Zelle mit dem höchsten Lastausgleichskoeffizienten entspricht, das Verfahren weiter Folgendes umfasst:
wenn die Basisstation, die der Zelle mit dem höchsten Lastausgleichskoeffizienten entspricht, gemäß Lastausgleichsparametern, die durch die Basisstation im Voraus konfiguriert sind, bestimmt, dass die Zelle mit dem höchsten Lastausgleichskoeffizienten einen Lastausgleich durchführen muss, Auswählen mindestens einer Benutzerausrüstung, UE, in der Zelle mit dem höchsten Lastausgleichskoeffizienten und Anweisen der mindestens einen UE, einen Schaltversuch in entsprechenden Zellen sequenziell gemäß dem Einstufungsergebnis und einer vorbestimmten Regel zu unternehmen.

9. Verfahren nach einem der Ansprüche 1 bis 7, wobei, bevor die Steuerungsvorrichtung die Lastausgleichskoeffizienten aller Zellen empfängt (S102), die zu einer Vielzahl von Basisstationen gehören, das Verfahren weiter Folgendes umfasst:
Einstellen eines zentral gesteuerten Lastausgleichsschalters, der in jeder Basisstation in einem aktivierten Zustand eingesetzt ist, wobei der zentral gesteuerte Lastausgleichsschalter zum Steuern einer Basisstation verwendet wird, wobei der zentral gesteuerte Lastausgleichsschalter angeordnet ist, um die Lastausgleichskoeffizienten aller Zellen zu senden, die zur Basisstation gehören.

10. System, umfassend:
eine Steuerungsvorrichtung und eine Vielzahl von Basisstationen,
wobei die Steuerungsvorrichtung Folgendes umfasst:
ein Empfangsmodul (22), das konfiguriert ist, um Lastausgleichskoeffizienten aller Zellen zu empfangen, die zu einer Vielzahl von Basisstationen gehören;
ein Einstufungsmodul (24), das konfiguriert ist, um alle Zellen gemäß Werten der Lastausgleichskoeffizienten einzustufen, die vom Empfangsmodul empfangen wurden, und um eine Zelle mit einem höchsten Lastausgleichskoeffizienten zu bestimmen; und
ein Sendemodul (26), das konfiguriert ist, um ein Einstufungsergebnis des Einstufungsmoduls an eine Basisstation zu senden, das der Zelle mit dem höchsten Lastausgleichskoeffizienten entspricht,
**dadurch gekennzeichnet, dass**
die Steuerungsvorrichtung konfiguriert ist, um, bevor das Empfangsmodul die Lastausgleichskoeffizienten aller Zellen empfängt, die zu einer Vielzahl von Basisstationen gehören, periodisch Lastausgleichskoeffizienten eines laufenden Zyklus zu empfangen, die von der Vielzahl von Basisstationen gesendet wurden,
wobei jede Basisstation in der Vielzahl von Basisstationen ausgelegt ist, um periodisch Lastausgleichskoeffizienten des laufenden Zyklus aller Zellen zu berechnen, die zur Basisstation gehören, und ausgelegt ist, um die Lastausgleichskoeffizienten des laufenden Zyklus an die Steuerungsvorrichtung zu senden.

## Revendications

1. Procédé d'équilibrage de charge, comprenant :
la réception (S102), par un appareil de commande, de coefficients d'équilibrage de charge de toutes les cellules qui appartiennent à une pluralité de stations de base ;
le classement (S104), par l'appareil de commande, de toutes les cellules en fonction de valeurs des coefficients d'équilibrage de charge et la détermination d'une cellule ayant un coefficient d'équilibrage de charge le plus élevé ; et
l'envoi (S106), par l'appareil de commande, d'un résultat du classement à une station de base correspondant à la cellule ayant le coefficient d'équilibrage de charge le plus élevé,
**caractérisé en ce qu'**avant la réception (S102) par l'appareil de commande des coefficients d'équilibrage de charge de toutes les cellules qui appartiennent à une pluralité de stations de base, le procédé comprend en outre :
la réception périodique, par l'appareil de commande, de coefficients d'équilibrage de charge d'un cycle actuel envoyés par la pluralité de stations de base, dans lequel les coefficients d'équilibrage de charge du cycle actuel sont obtenus selon les étapes suivantes :
le calcul périodique, par chaque station de base de la pluralité de stations de base, de coefficients d'équilibrage de charge du cycle actuel de toutes les cellules qui appartiennent à la station de base, et l'envoi des coefficients d'équilibrage de charge du cycle actuel à l'appareil de commande.

2. Procédé selon la revendication 1, dans lequel l'envoi (S106), par l'appareil de commande, du résultat du classement à la station de base correspondant à la cellule ayant le coefficient d'équilibrage de charge le plus élevé comprend :
la génération, par l'appareil de commande, d'une liste d'identifiants de cellules basée sur des identifiants de cellules correspondant à des cellules respectives selon le résultat du classement ; et
l'envoi, par l'appareil de commande, de la liste d'identifiants de cellules à la station de base correspondant à la cellule ayant le coefficient d'équilibrage de charge le plus élevé.

3. Procédé selon la revendication 1, dans lequel l'appareil de commande est déployé côté réseau ou côté station de base.

4. Procédé selon la revendication 3, dans lequel le côté réseau comprend l'un quelconque parmi : une couche de gestion d'éléments de réseau et un réseau central.

5. Procédé selon la revendication 4, dans lequel lorsque l'appareil de commande est déployé au niveau du réseau central, l'appareil de commande reçoit les coefficients d'équilibrage de charge via une interface S1.

6. Procédé selon la revendication 3, dans lequel le côté station de base comprend une station de base quelconque de la pluralité de stations de base.

7. Procédé selon la revendication 6, dans lequel lorsque l'appareil de commande est déployé au niveau d'une station de base quelconque de la pluralité de stations de base, l'appareil de commande reçoit les coefficients d'équilibrage de charge via une interface X2.

8. Procédé selon l'une quelconque des revendications 1 à 7, dans lequel après l'envoi (S106), par l'appareil de commande, du résultat du classement à la station de base correspondant à la cellule ayant le coefficient d'équilibrage de charge le plus élevé, le procédé comprend en outre :
lorsque la station de base correspondant à la cellule ayant le coefficient d'équilibrage de charge le plus élevé détermine, en fonction de paramètres d'équilibrage de charge configurés par la station de base à l'avance, que la cellule ayant le coefficient d'équilibrage de charge le plus élevé doit effectuer un équilibrage de charge, la sélection d'au moins un équipement utilisateur, UE, dans la cellule ayant le coefficient d'équilibrage de charge le plus élevé et la demande à l'au moins un UE de faire une tentative de commutation dans des cellules respectives de façon séquentielle en fonction du résultat du classement et d'une règle prédéterminée.

9. Procédé selon l'une quelconque des revendications 1 à 7, dans lequel avant la réception (S102), par l'appareil de commande, des coefficients d'équilibrage de charge de toutes les cellules qui appartiennent à une pluralité de stations de base, le procédé comprend en outre :
le réglage d'un commutateur d'équilibrage de charge à commande centralisée déployé dans chaque station de base sur un état activé, dans lequel le commutateur d'équilibrage de charge à commande centralisée est utilisé pour commander une station de base où se trouve le commutateur d'équilibrage de charge à commande centralisée pour envoyer les coefficients d'équilibrage de charge de toutes les cellules qui appartiennent à la station de base.

10. Système, comprenant :
un appareil de commande et une pluralité de stations de base ;
dans lequel l'appareil de commande comprend :
un module de réception (22), configuré pour recevoir des coefficients d'équilibrage de charge de toutes les cellules qui appartiennent à une pluralité de stations de base ;
un module de classement (24) configuré pour classer toutes les cellules en fonction de valeurs des coefficients d'équilibrage de charge reçus par le module de réception et pour déterminer une cellule ayant un coefficient d'équilibrage de charge le plus élevé ; et
un module d'envoi (26), configuré pour envoyer un résultat de classement à une station de base correspondant à la cellule ayant le coefficient d'équilibrage de charge le plus élevé,
**caractérisé en ce que**
l'appareil de commande est configuré, avant que le module de réception reçoive les coefficients d'équilibrage de charge de toutes les cellules qui appartiennent à une pluralité de stations de base, pour recevoir périodiquement des coefficients d'équilibrage de charge d'un cycle actuel envoyés par la pluralité de stations de base,
dans lequel chaque station de base de la pluralité de stations de base est adaptée pour calculer périodiquement des coefficients d'équilibrage de charge du cycle actuel de toutes les cellules qui appartiennent à la station de base, et adaptée pour envoyer les coefficients d'équilibrage de charge du cycle actuel à l'appareil de commande.
